# EUROPEAN PATENT SPECIFICATION

(11) **EP 2 869 080 B1**
(45) Date of publication and mention of the grant of the patent: **11.05.2022**
(21) Application number: 14190863.2
(22) Date of filing: 29.10.2014
(51) Int. Cl.: G01S 1/68, G01S 5/02, G01S 5/14, G01S 11/06, G01S 11/14

(54) **Method of controling a terminal device and program**
Verfahren zur Steuerung eines Endgeräts und Programm
Procédé de commande d'un dispositif de terminal et programme

(30) Priority: 31.10.2013 JP 2013227507
(43) Date of publication of application: 06.05.2015
(73) Proprietor: YAMAHA CORPORATION, Hamamatsu-shi Shizuoka-ken 430-8650 (JP)
(72) Inventor: Sakurada, Shinya, Shizuoka, 430-8650 (JP)
(74) Representative: Hoffmann Eitle

(56) References cited:
- JP-A- 2012 252 371
- US-A1- 2011 018 687
- US-A1- 2011 028 160
- US-B1- 7 710 824

## Description

### BACKGROUND OF THE INVENTION

### 1. Field of the Invention

The present invention relates to a technique for detecting that a person visits a predetermined place.

### 2. Description of the Related Art

There has been proposed a technique which detects whether or not a person visits a predetermined place such as a store or an event site, by utilizing the function of a terminal device carried by the person. JP-A-2012-252371 discloses an information processing system which determines whether or not a customer visits a specific place by utilizing inaudible sound (that is, ultrasonic wave). In the information processing system described in JP-A-2012-252371, specific identification information is transmitted utilizing the inaudible sound to a portable terminal carried by a customer from an installation device installed at the specific place. The terminal device extracts the identification information from the inaudible sound and transmits the extracted identification information to a management server.

### SUMMARY OF THE INVENTION

The information processing system described in JP-A-2012-252371 is configured to determine the visit of a person with high accuracy, by utilizing the physical property of sound wave that sound wave is lower in its ability of penetrating an obstacle such as a wall or a door as compared with electric wave. However, according to this physical property, even if a person visits a place required for detecting the visit, a terminal device carried by the person may not receive the sound wave. This is because, for example, when a person carries a terminal device, the terminal device is often placed at a location such as the inside of a pocket or a bag to which sound wave is less likely reachable. Thus, in order to determine whether or not a person visits a predetermined place by utilizing the information transmitted using sound wave, the person must pay the attention so as to place the terminal device at a sound wave receivable position. Further, according to the information processing system described in JP-A-2012-252371, the information obtained by the terminal device is same irrespective of the existing position of a person so long as the person exists within a sound wave reachable area. Thus, for example, it is not considered as to a position where a person exists within the sound wave reachable area.

US2011/0028160 A1 discloses a system and method for transmitting store advertising information directly to consumers through their mobile phones. The system includes one or more servers, cell phones and one or more communications networks which can be cellular networks, the internet and other networks including wired and wireless networks. The presence of a mobile phone in an enclosed space, e.g. a store, is detected and respective information is transmitted to a server computer, which processes an award for the presence of the mobile phone in the enclosed area. The award is associated with a user account of the user of the mobile phone. The user receives the award via the mobile phone.

The present invention has been achieved in view of the aforesaid circumstances and provides a computer implemented method of controlling a terminal device as described in claim 1. Advantageous embodiments of the method are described in the subclaims.

Another aspect of the present invention provides a program for controlling a computer in a terminal device as described in claim 8. Advantageous embodiments of the program are described in the subclaims.

According to the aspects of the present invention, the terminal device can receive information according to an area where a user exists when the user carrying the terminal device visits a predetermined place.

### BRIEF DESCRIPTION OF THE DRAWINGS

Fig. 1 is a diagram showing the entire configuration of a visit detection system according to a first embodiment.
Fig. 2 is a diagram for explaining the position of a user carrying a terminal device according to the first embodiment.
Fig. 3 is a block diagram showing the configuration of the visit detection system according to the first embodiment.
Fig. 4 is a flowchart showing a processing performed, at the time of visiting a store, by the terminal device according to the first embodiment.
Fig. 5 is a diagram for explaining the positional change of a user of the terminal device at the time of visiting the store, according to the first embodiment.
Fig. 6 is a sequence chart showing a processing performed between the terminal device and a management server, according to the first embodiment.
Fig. 7 is a flowchart showing a processing performed, at the time of leaving the store, by the terminal device according to the first embodiment.
Fig. 8 is a diagram for explaining the positional change of a user carrying the terminal device at the time of leaving the store, according to the first embodiment.
Fig. 9 is a block diagram showing the hardware configuration of a terminal device according to a second embodiment.
Fig. 10 is a flowchart showing a processing performed, at the time of visiting the store, by the terminal device according to the second embodiment.
Fig. 11 is a diagram for explaining the positional change of a user carrying the terminal device according to a third embodiment.
Fig. 12 is a flowchart showing a processing performed, at the time of visiting the store, by the terminal device according to the third embodiment.
Fig. 13 is a flowchart showing a processing performed, at the time of leaving the store, by the terminal device according to the third embodiment.
Fig. 14 is a diagram for explaining a relation between the position of a user and the operation of a terminal device, according to a modified example 1.
Fig. 15 is a diagram for explaining a relation between the position of a user and the operation of a terminal device, according to a modified example 2.
Fig. 16 is a diagram for explaining the positional change of a user carrying a terminal device, according to a modified example 3.
Fig. 17 is a diagram showing the entire configuration of a visit detection system according to a modified example 4.
Fig. 18 is a block diagram showing the configuration of the visit detection system according to the modified example 4.
Fig. 19 is a flowchart showing a processing performed, at the time of visiting the store, by a terminal device according to the modified example 4.
Fig. 20 is a flowchart showing a processing performed, at the time of leaving the store, by a terminal device according to the modified example 4.

### DETAILED DESCRIPTION OF THE EXEMPLARY EMBODIMENTS

Hereinafter, embodiments according to the present invention will be explained with reference to accompanying drawings.

### First Embodiment

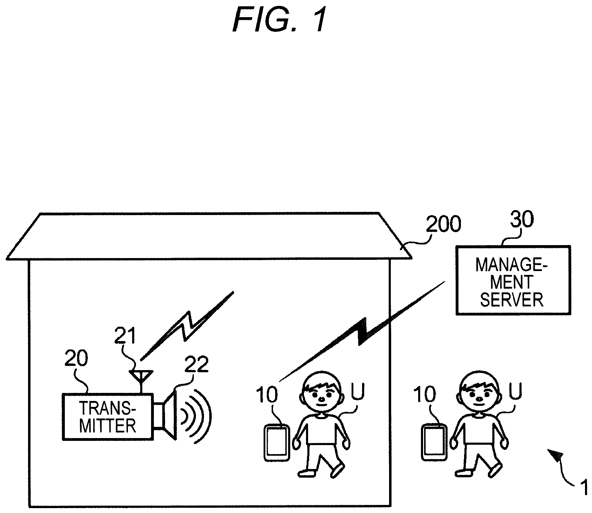

Fig. 1 is a diagram showing the entire configuration of a visit detection system 1 according to a first embodiment of the present invention.

The visit detection system 1 is an information processing system which detects the visit of a person to a predetermined place such as indoor or outdoor. The visit detection system 1 according to this embodiment detects that a person visits a store 200. The store 200 is a retail shop, a cafe or a restaurant, for example, but the kind of the store is not limited thereto. As shown in Fig. 1, the visit detection system 1 includes a terminal device 10 carried by a user U, a transmitter 20 installed in the store 200, and a management server 30 which manages information relating to the detection of visit to the store. The management server 30 includes a hardware resource equivalent to a general purpose server (computer). The management server manages information relating to the history of the visit to the store 200 of the user U and provides a predetermined service to the user U having visited the store 200, for example.

The user U carrying the terminal device 10 can be a customer of the store 200. The terminal device 10 is carried by the user U in such a manner of being held by the hand of the user U or placed within a pocket or a bag. The terminal device 10 is a smartphone in this embodiment. Fig. 1 shows, as a typical example, one terminal device 10 existing within the premises of the store 200 (indoor of the store 200, for example) and another terminal device 10 existing outside of the premises of the store 200 (outdoor of the store 200, for example).

The transmitter 20 is a device which transmits information acting as a position beacon using sound wave and electric wave. The transmitter 20 includes an antenna 21 acting as an electric wave transmitter for transmitting (emitting) electric wave and a speaker 22 acting as a sound wave transmitter for transmitting (emitting) sound wave. Electric wave differs from sound wave, for example, in a reachable distance (reachable area) from a transmission position and an ability of penetrating an obstacle such as a wall, a door or a partition. Sound wave has physical properties that it is more excellent in straight travelling properties and less likely diffracts, as compared with electric wave. Thus, when the obstacle having sound insulating properties such as a wall, a door or a partition is used as a unit for limiting a sound wave reachable area (area limiting unit), the sound wave reachable area can relatively be easily controlled.

The visit detection system 1 detects the visit of the user U to the store 200 based on the information transmitted to the terminal device 10 from the transmitter 20, by utilizing the difference of the physical properties between electric wave and sound wave.

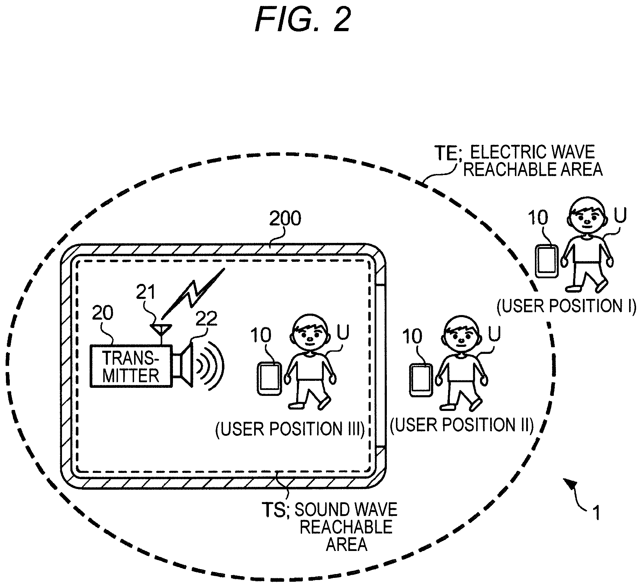

Fig. 2 is a diagram for explaining the position of the user U supposed to be a customer of the store 200.

As shown in Fig. 2, an area TE to which electric wave transmitted from the antenna 21 of the transmitter 20 is reachable (hereinafter referred to "electric wave reachable area") is formed so as to contain both the premises of the store 200 and the outside area of the premises of the store 200, for example. An area TS to which sound wave transmitted from the speaker 22 of the transmitter 20 is reachable (hereinafter referred to "sound wave reachable area") is formed by the premises of the store 200, for example. The transmitter 20 transmits sound wave and electric wave so that the entire area of the sound wave reachable area TS is contained within the electric wave reachable area TE. In this case, the relative position of the user U with respect to the transmitter 20 can be classified into the following three types, that is, a "user position I", a "user position II" and a "user position III".

The "user position I" locates the outside of the electric wave reachable area TE and also the outside of the sound wave reachable area TS.

The "user position II" locates within the electric wave reachable area TE, but the outside of the sound wave reachable area TS.

The "user position III" locates within the electric wave reachable area TE and also within the sound wave reachable area TS.

In the visit detection system 1, among the "user position I" to the "user position III", the user U existing at the user position III, that is, the user U existing within the sound wave reachable area TS is detected as a person having visited the store 200.

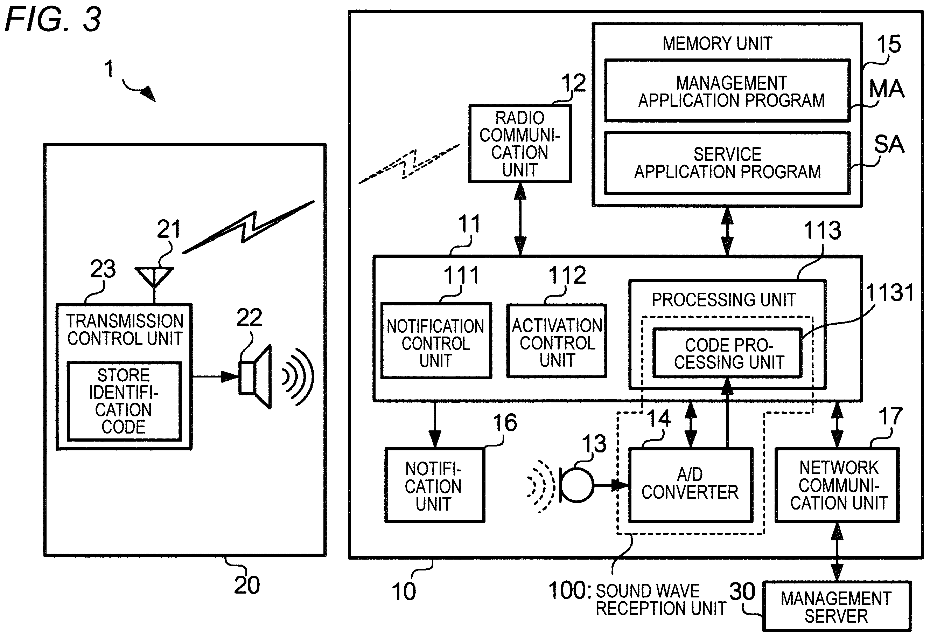

Fig. 3 is a block diagram showing the configuration of the visit detection system 1.

First, the configuration of the transmitter 20 will be explained. As shown in Fig. 3, the transmitter 20 includes, as the hardware configuration thereof, the antenna 21, the speaker 22 and a transmission control unit 23. The transmission control unit 23 is, for example, a microcomputer which includes an arithmetic processing unit such as a CPU (Central Processing Unit), a main memory to which the arithmetic processing unit accesses, and a code memory for storing an identification code allocated to the transmitter 20. The identification code stored in the code memory is used for uniquely identifying the store 200 in this embodiment. This identification code is hereinafter called as a "store identification code".

The transmission control unit 23 performs the control relating to the information transmission using electric wave and sound wave. The information transmission using electric wave will be explained. The transmission control unit 23 transmits, from the antenna 21, electric wave for performing radio communication conforming to Bluetooth (to be concrete, short range radio communication). In this embodiment, the transmission control unit 23 periodically (for example, at a predetermined period) transmits, from the antenna 21, the store identification code read from the code memory according to the standard called Bluetooth LE (Low Energy).

The information transmission using sound wave will be explained. The transmission control unit 23 transmits, from the speaker 22, sound wave for performing audio communication. In this embodiment, the transmission control unit 23 periodically (for example, at a predetermined period) transmits, from the speaker 22, the store identification code read from the code memory using the technique of an audio signal processing. For example, the transmission control unit 23 modulates the store identification code by a specific spread code to thereby generate an audio signal in which the frequency of the spread code after the modulation is shifted to a higher frequency band (for more details, see WO 2010/016589 filed by the same applicant as the present application). The transmission control unit 23 supplies the generated audio signal on which the store identification code is superimposed to the speaker 22 to thereby transmit sound wave representing the audio signal.

In the frequency shift of the spread code after the modulation, the transmission control unit 23 shifts the frequency to a frequency range which is a relatively high frequency range of an audible range not lower than a frequency (for example, 18 kHz) hardly hear for a person but less in uncomfortable feeling and unpleasant feeling and further contains the upper limit value (for example, 20 kHz) of the audible range. The upper limit value of the audible range may be determined based on the sampling frequency of the transmitter 20 and the terminal device 10. For example, the upper limit value of the audible range may be 22.05 kHz (when the sampling frequency is 44.1 kHz) or 24.0 kHz (when the sampling frequency is 48.0 kHz). The transmission control unit 23 may superimpose the store identification code on the audio signal of the audible frequency range recognizable by a person. For example, the transmission control unit 23 superimposes the store identification code on the audio signal representing audible sound such as music or human voice (for example, a voice signal for guiding goods sold in the store 200 and services provided by the store).

Incidentally, the frequency band on which the store identification code is superimposed may be one capable of generating sound wave from the speaker 22 and is not limited to the aforesaid frequency band. Further, the transmission control unit 23 may transmit the information using sound wave, by means of OFDM (Orthogonal Frequency-Division Multiplexing) modulation or other modulation system in place of the spread spectrum modulation. The transmitter 20 may have a function of obtaining and updating the store identification code stored in the code memory, through the communication with the management server 30 and other external devices via a communication network.

Next, the configuration of the terminal device 10 will be explained. As shown in Fig. 3, the terminal device 10 includes, as the hardware configuration thereof, a control unit 11, a radio communication unit 12, a microphone 13, an A/D (Analog to Digital) converter 14, a memory unit 15, a notification unit 16 and a network communication unit 17.

The control unit 11 is a microcomputer which includes an arithmetic processing unit such as a CPU and a main memory which the arithmetic processing unit accesses. The control unit 11 controls the respective constituent elements of the terminal device 10 by operating programs. The radio communication unit 12 is an interface which includes, for example, a communication circuit and an antenna to thereby perform radio communication conforming to Bluetooth (short range radio communication). The radio communication unit 12 acts as an electric wave receiver for receiving electric wave transmitted from the transmitter 20. The microphone 13 is a sound wave detector for detecting sound wave. The microphone converts the detected sound wave into an audio signal of an analog format as an electrical signal and supplies the audio signal of an analog format to the A/D converter 14. The A/D converter 14 performs an A/D conversion processing of converting the audio signal of an analog format into an audio signal of a digital format and supplies the audio signal of a digital format to the control unit 11.

The memory unit 15 has a memory device such as an EEPROM (Electronically Erasable and Programmable ROM) or a flash memory. The memory unit 15 stores, for example, a management application program MA and service application programs SA as application programs to be executed by the control unit 11.

The management application program MA is an application program for realizing the function relating to the detection of the visit to the store. In the management application program MA, for example, information representing a correspondence relation between the store identification codes and the service application programs SA is written. Alternatively, in the management application program MA, information of an access destination (for example, an address of a communication destination) for obtaining the information representing the correspondence relation by means of communication via the communication network may be written. The service application program SA is an application program for realizing the function relating to the service provided from the management server 30. In the service application program SA, for example, information of an access destination (for example, an address of a communication destination) for receiving the provision of the service is written. Further, the service application program SA realizes a function for executing a processing for utilizing the service having been provided already (for example, a display processing of images and a data communication processing relating to the service).

The notification unit 16 includes, for example, a vibrator and a speaker and acts as a notification unit for notifying predetermined information to the user U. The notification unit 16 may be a unit which generates a phenomenon perceptible by the user U to thereby notify the user U of the predetermined information. The network communication unit 17 is an interface which includes, for example, a communication circuit and an antenna to thereby connect to the network. The network communication unit 17 communicates with the management server 30 via the network.

The terminal device 10 includes the configuration substantially same as a general smartphone such as a user interface for providing a GUI (Graphic User Interface) in addition to the aforesaid hardware configuration.

The control unit 11 of the terminal device 10 realizes functions corresponding to a notification control unit 111, an activation control unit 112 and a processing unit 113 by operating the management application program MA. The processing unit 113 includes a code processing unit 1131 which performs a code processing for obtaining the store identification code transmitted by means of sound wave from the transmitter 20.

When electric wave transmitted from the transmitter 20 is received by the radio communication unit 12, the notification control unit 111 (notification controller) notifies the user U of the reception of electric wave from the transmitter 20 via the notification unit 16. The radio communication unit 12 waits for electric wave during the operation of the management application program MA, and receives electric wave transmitted from the transmitter 20. The notification control unit 111 may estimate a distance between the terminal device 10 and the transmitter 20 based on the intensity of electric wave received from the transmitter 20 and notify the user of the distance. In this case, for example, the notification control unit 111 determines that the terminal device 10 is a predetermined distance or more away from the transmitter 20 on condition that the intensity of electric wave received by the radio communication unit 12 is lower than a predetermined level. Then, under the control by the notification control unit 111, the notification unit 16 notifies the user U that the terminal device 10 is the predetermined distance or more away from the transmitter 20.

The activation control unit 112 (activation controller) performs an activation control of activating and stopping a sound wave reception unit 100. For example, the activation control unit 112 activates the sound wave reception unit 100 to place it in a standby state for receiving sound wave, on condition that the radio communication unit 12 receives electric wave transmitted from the transmitter 20. The sound wave reception unit 100 (sound receiver) is a unit for receiving sound wave when it is placed in the standby state for receiving sound wave. To be concrete, the sound wave reception unit 100 is realized by the A/D converter 14 and the code processing unit 1131. When the sound wave reception unit 100 is in the standby state for receiving sound wave, the A/D converter 14 performs the A/D conversion processing and the code processing unit 1131 performs the code processing. The activation control unit 112 may estimate the distance between the terminal device 10 and the transmitter 20 based on the intensity of electric wave received from the transmitter 20 and perform the activating control according to the estimated distance. In this case, for example, the activation control unit 112 determines that the terminal device 10 is a predetermined distance or more away from the transmitter 20 to thereby stop the sound wave reception unit 100 on condition that the intensity of electric wave received by the radio communication unit 12 is lower than a predetermined level.

The processing unit 113 (processor) performs a specific processing based on the received sound wave when the sound wave reception unit 100 receives sound wave from the transmitter 20. For example, the code processing unit 1131 of the processing unit 113 extracts the modulated signal by subjecting the audio signal of a digital format supplied from the A/D converter 14 to a filtering processing, and then performs the code processing. In the code processing, the code processing unit 1131 performs a decode processing on the extracted signal to obtain the store identification code. Then, the processing unit 113 activates the service application program SA corresponding to the store identification code obtained by the code processing and performs a processing based on the service application program SA thus activated. For example, the processing unit 113 communicates with the management server 30 via the network communication unit 17 based on the service application program SA.

Next, the explanation will be made as to the operation of the terminal device 10 when the user U visits the store 200.

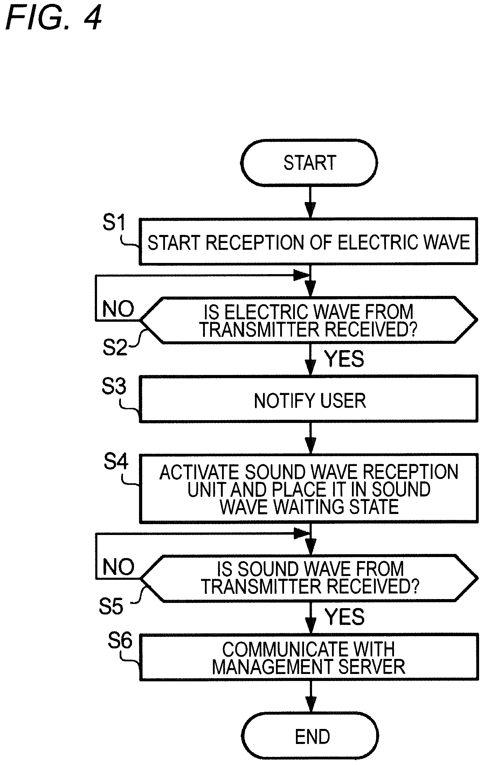

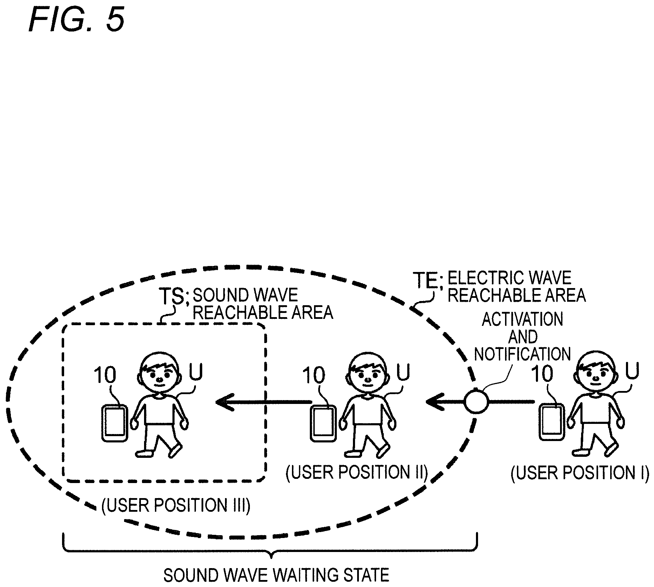

Fig. 4 is a flowchart showing the flow of a processing performed by the terminal device 10. Fig. 5 is a diagram for explaining the positional change of the user U. In a state before the terminal device 10 starts the processing operation described hereinafter based on the present invention, the user U is supposed to exist at the user position I which is the outside of the electric wave reachable area TE and also the outside of the sound wave reachable area TS.

First, the control unit 11 of the terminal device 10 starts the management application program MA stored in the memory unit 15 and starts the reception of electric wave by the radio communication unit 12 (step S1). The control unit 11 may activate the management application program MA according to the operation by the user U or operate the management application program MA in the background. During the operation of the management application program MA, the control unit 11 tries to perform the processing of obtaining the store identification code from electric wave received by the radio communication unit 12.

Next, the control unit 11 determines whether or not the radio communication unit 12 receives electric wave from the transmitter 20 (step S2). In the processing of step S2, the control unit 11 determines the presence or absence of the reception of electric wave from the transmitter 20 depending on whether or not the store identification code is obtained from the received electric wave. As shown in Fig.5, when the user U exists at the user position I, the control unit 11 determines "NO" in the processing of step S2 and waits for the reception.

Thereafter, it is supposed that the user U moves to the user position II which is within the electric wave reachable area TE and the outside of the sound wave reachable area TS. In this case, the control unit 11 obtains the store identification code from electric wave received from the transmitter 20 and determines that electric wave is received from the transmitter 20 (YES in step S2). When it is determined "YES" in the processing of step S2, the control unit 11 notifies the user U of the reception of electric wave from the transmitter 20 by means of the notification unit 16 (step S3). For example, the control unit 11 operates the vibrator or drives the speaker to thereby output predetermined sound (for example, ring alert or alarm tone). Even if the terminal device 10 is placed within the pocket or the bag etc. of the user U, there arises no problem in the reception of electric wave from the transmitter 20. When the user U recognizes the notification from the terminal device 10, the user may take out and hold the terminal device 10 even when the terminal device 10 is placed within the pocket or the bag etc. Alternatively, in addition to or instead of the above notification, an icon or the like may be displayed on a screen of the terminal device 10 to indicate that the electric wave is received from the transmitter 20.

Next, the control unit 11 activates the sound wave reception unit 100 to thereby place it in the standby state for receiving sound wave (step S4). According to the processing of step S4, the control unit 11 activates the A/D converter 14 so as to start the A/D conversion processing and also starts the code processing. As shown by "activation and notification" in Fig. 5, when it is determined that the user U moves within the electric wave reachable area TE from the outside of the electric wave reachable area TE, the control unit 11 notifies the user U of this fact and activates the sound wave reception unit 100 to thereby place it in the standby state for receiving sound wave. When the sound wave reception unit 100 is activated and placed in the standby state for receiving sound wave, for example, an icon etc. may be displayed on the screen of the terminal device 10. In the processing of step S4, the control unit 11 specifies the service application program SA, having the corresponding relation to the store identification code obtained by the reception of electric wave, based on the management application program MA and activates the specified service application program SA. Then, the control unit 11 is placed in a state of executing a processing based on the service application program SA thus activated.

Next, the control unit 11 determines whether or not sound wave from the transmitter 20 is received (step S5). In the processing of step S5, the control unit 11 determines presence or absence of the reception of sound wave from the transmitter 20 depending on whether or not the sound wave reception unit 100 obtains the store identification code. As shown in Fig. 5, when the user U exists at the user position II, the control unit 11 determines "NO" in the processing of step S5 and waits for the reception.

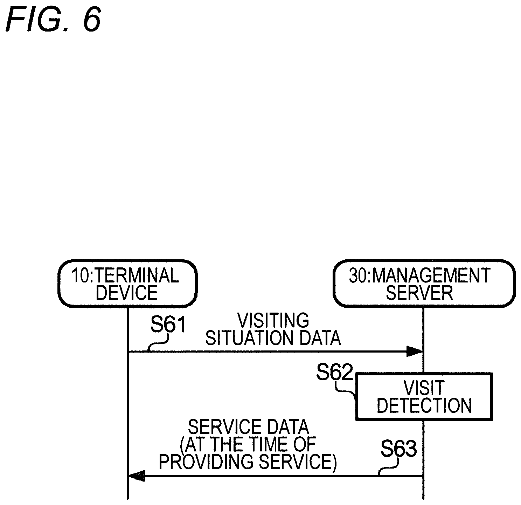

Thereafter, it is supposed that the user U moves to the user position III which is within the electric wave reachable area TE. In this case, the control unit 11 determines that the sound wave reception unit 100 obtains the store identification code and sound wave is received from the transmitter 20 (YES in step S5). When the sound wave reception unit 100 obtains the store identification code, the control unit 11 communicates with the management server 30 via the network communication unit 17 according to the service application program SA being operated, and executes a predetermined processing based on the service application program SA (step S6). For example, the control unit 11 accesses the management server 30 via the network communication unit 17 using a communication address designated by the service application program SA. The control unit 11 communicates with the management server 30 via the network communication unit 17 to thereby perform a processing based on the service application program SA as will be explained with reference to Fig. 6.

Fig. 6 is a sequence chart showing the processing based on the service application program SA, performed between the terminal device 10 and the management server 30. The control unit 11 of the terminal device 10 accesses the management server 30 via the network communication unit 17 and transmits data representing visiting situation to the management server 30 (step S61). The visiting situation data represents the situation of visit of the user U and includes, for example, the terminal identification information (for example, telephone number) specific to the terminal device 10 and the store identification code obtained by the code processing. The control unit 11 transmits the visiting situation data to the management server 30 each time the store identification code transmitted from the transmitter 20 is obtained or each predetermined time interval while the store identification code is obtained continuously.

The management server 30 detects the visit of the user U carrying the terminal device 10 to the store, based on the visiting situation data received from the terminal device 10 (step S62). In the processing of step S62, the management server 30 performs a database processing of storing the visit detection result in a database. In the database processing, the management server 30 stores, in the database, visit history information representing a visit history in association with the terminal identification information and the store identification code. The visit history information includes, for example, at least one of visiting date and time, staying time in the store 200, and the number of visit to the store.

The management server 30 transmits service data representing the predetermined service to the terminal device 10 in the case of providing a service to the user U as a response to the reception of the visiting situation data (step S63). The service provided to the user U by the management server 30 includes, for example, at least one of the provision of a coupon or a monetary value such as a point corresponding to the visit, the transmission of a message for guiding the user U to a web shop (for example, URL (Uniform Resource Locator) of a web page), and the distribution of contents (for example, advertisement contents for guiding goods or services to the user). However, the concrete kinds of the services are not limited to these examples. The management server 30 performs a predetermined processing generated at the time of providing the service to the terminal device 10, in the case of transmitting the service data to the terminal device 10. This processing is, for example, a coupon cancelling processing or a coupon issuance processing.

When the control unit 11 of the terminal device 10 receives the service data from the management server 30 via the network communication unit 17, the control unit 11 stores the received service data in the memory unit 15. In the case where the user U utilizes the service thus provided, the control unit 11 reads the service data from the memory unit 15 during the execution of the service application program SA to thereby perform a processing for utilizing the service (for example, the display processing and the communication processing).

Subsequently, the explanation will be made as to the operation of the terminal device 10 when the user U leaves the store 200.

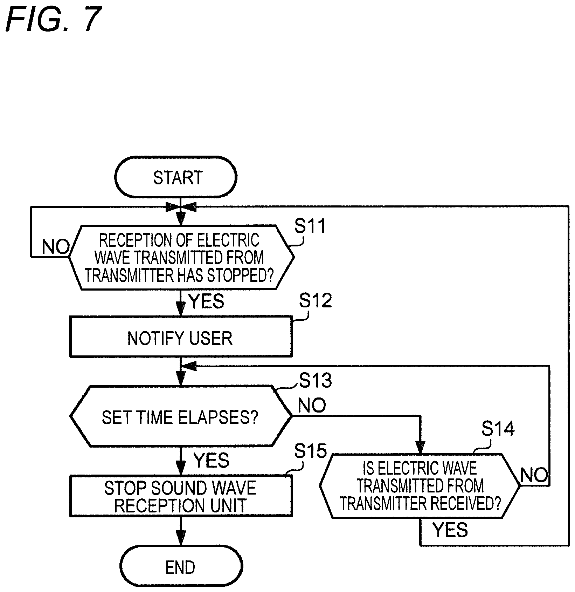

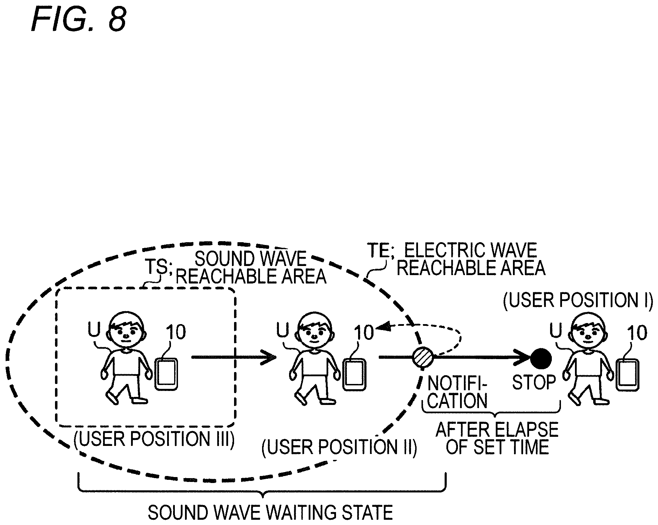

Fig. 7 is a flowchart showing the flow of a processing performed by the terminal device 10. Fig. 8 is a diagram for explaining the positional change of the user U. In a state before the terminal device 10 starts the operation described hereinafter, the user U is supposed to exist at the user position III.

First, the control unit 11 of the terminal device 10 determines whether or not the reception by the radio communication unit 12 of electric wave transmitted from the transmitter 20 has stopped (step S11). As shown in Fig. 8, when the user exists within the electric wave reachable area TE (that is, at the user position II or the user position III), the control unit 11 obtains the store identification code from the electric wave received from the transmitter 20. Thus, the control unit 11 determines "NO" in the processing of step S11 and the processing is waited.

Thereafter, it is supposed that the user U moves to the outside of the electric wave reachable area TE (that is, user position I). In this case, the control unit 11 determines that the reception of electric wave transmitted from the transmitter 20 has stopped (YES in step S11). Then, the notification unit 16 notifies the user U that the reception of electric wave transmitted from the transmitter 20 has stopped (step S12). In the processing of step S12, the control unit 11 performs the notification to the user U in the same manner as the processing of step S3.

Next, the control unit 11 determines whether or not a set time elapses after the reception of electric wave by the radio communication unit 12 stops or after the notification is made to the user U by the processing of step S12 (step S13). This set time is 5 seconds, for example, but may be a time other than 5 seconds. Further, this set time may be fixed or set by the user U.

When it is determined that the set time does not elapse (NO in step S13), the control unit 11 determines whether or not the radio communication unit 12 receives electric wave from the transmitter 20 (step S14). When the control unit 11 determines that electric wave from the transmitter 20 is not received (NO in step S14), the processing is returned to step S13. Thereafter, when the control unit 11 determines that the set time elapses without receiving electric wave from the transmitter 20 (YES in step S13), the control unit 11 stops the sound wave reception unit 100 (step S15). As shown by "notification" and "stop" in Fig. 8, the control unit 11 performs the notification to the user U when the user U moves to the outside of the electric wave reachable area TE from the inside of the electric wave reachable area TE, and further stops the sound wave reception unit 100 when the set time elapses thereafter. In the processing of step S15, the control unit 11 may exit the management application program MA and the service application program SA each being operated.

On the other hand, when the control unit 11 determines that electric wave from the transmitter 20 is received before the set time elapses (YES in step S14), the processing is returned to step S11. That is, the control unit 11 maintains the sound wave reception unit 100 in the standby state for receiving sound wave. For example, as shown by an arrow of a broken line in Fig. 8, when the user U temporarily moves to the outside of the electric wave reachable area TE and then returns within the electric wave reachable area TE before the set time elapses, the terminal device 10 receives again electric wave from the transmitter 20. When the terminal device 10 does not receive electric wave from the transmitter 20 only during a short time period within the set time, it is assumed that the user U merely moves temporarily to the outside of the electric wave reachable area TE and does not leave the store. As a result, the control unit 11 maintains the sound wave reception unit 100 in the standby state for receiving sound wave.

As well as the case where the user moves temporarily to the outside of the electric wave reachable area TE, for example, when there is a local place to which electric wave from the transmitter 20 does not reach within the electric wave reachable area TE or when the terminal device 10 temporarily cannot receive electric wave due to malfunction of the terminal device 10 or the transmitter 20, the terminal device 10 may again receive electric wave from the transmitter 20 before the set time elapses.

In the visit detection system 1 explained above, when the terminal device 10 receives electric wave from the transmitter 20, the terminal device 10 determines that the user arrives at an area (that is, user position II) close to the area (that is, user position III) to which the information transmitted from the transmitter 20 using sound wave is reachable. Then, the terminal device 10 notifies the user U of this determination and activates the sound wave reception unit 100. When the user U recognizes according to the notification from the terminal device 10 that the user approaches the area to which sound wave transmitted from the transmitter 20 is reachable, the user sets the terminal device 10 to a sound wave receivable state (that is, user position III). According to this operation of the user U, the terminal device 10 is placed in the state capable of receiving the information transmitted from the transmitter 20 using sound wave.

Further, without always placing the sound wave reception unit 100 in the standby state for receiving sound wave, the terminal device 10 can receive sound wave from the transmitter 20 when the user approaches the transmitter 20. Thus, the terminal device 10 can reduce the time period of the standby state for receiving sound wave to thereby reduce power consumption. In general, the power consumption of the electric wave waiting state is smaller than that of the sound wave waiting state. In particular, according to the standard of Bluetooth LE, the power consumption is small even when the terminal device 10 continues the standby state for receiving electric wave.

### Second Embodiment

The visit detection system 1 according to the second embodiment, which is not forming part of the invention as claimed, will be explained. The visit detection system 1 according to the second embodiment differs from the first embodiment in a point that the terminal device 10 activates the sound wave reception unit 100 when it is determined that the terminal device 10 is in a sound wave receivable state after the reception of electric wave from the transmitter 20. The configurations and the operations of the transmitter 20 and the management server 30 in this embodiment are same as those of the first embodiment.

In this embodiment, constituent elements and processing steps marked with the same symbols with those of the first embodiment act in the same manner as the first embodiment. Hereinafter, the visit detection system 1 according to this embodiment will be explained mainly as to differences from the first embodiment.

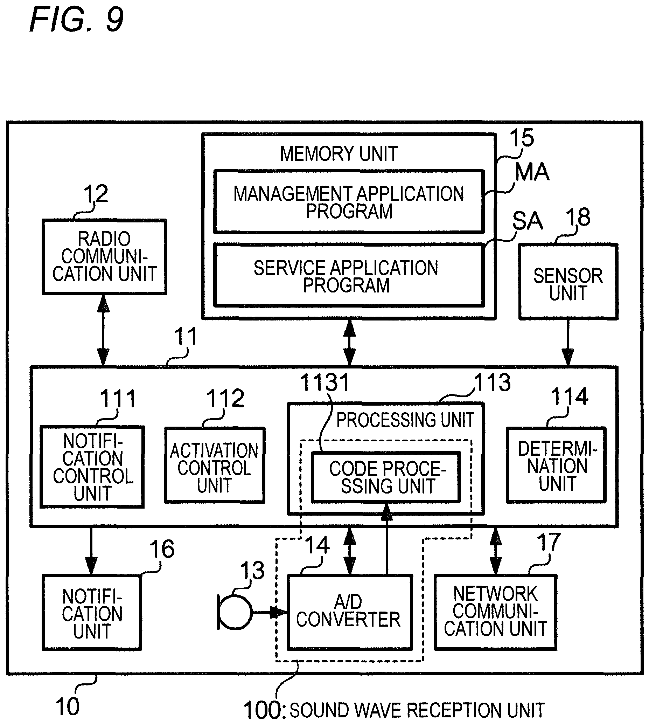

Fig. 9 is a block diagram showing the configuration of the terminal device 10. As shown in Fig. 9, the terminal device 10 according to this embodiment includes a sensor unit 18 in addition to the configuration explained in the first embodiment.

The sensor unit 18 is a sensor for detecting whether or not the terminal device 10 is in a sound wave receivable state. In this embodiment, the sensor unit 18 is a brightness sensor for detecting the brightness of the surrounding (periphery) of the terminal device 10. The sensor unit 18 detects light quantity representing the surrounding brightness of the terminal device 10 and supplies light quantity data representing the detected light quantity to the control unit 11.

The control unit 11 realizes a determination unit 114 in addition to the functional configuration explained in the first embodiment by operating the management application program MA. The determination unit 114 determines whether or not the terminal device 10 is in the sound wave receivable state. When the light quantity represented by the light quantity data supplied from the sensor unit 18 is a threshold value or more, the determination unit 114 determines that the terminal device 10 is in the sound wave receivable state. This is because, when the terminal device 10 is placed in a relatively bright environment, it is supposed that the user U holds the terminal device 10 by the hand. In contrast, when the light quantity represented by the light quantity data supplied from the sensor unit 18 is less than the threshold value, the determination unit 114 determines that the terminal device 10 is not in the sound wave receivable state. Thus is because, when the terminal device 10 is placed in a relatively dark environment, it is supposed that the user U carries the terminal device 10 within a place such a pocket or a bag or supposed that the user U does not carry the terminal device 10.

Next, the explanation will be made as to the operation of the terminal device 10 when the user U visits the store 200.

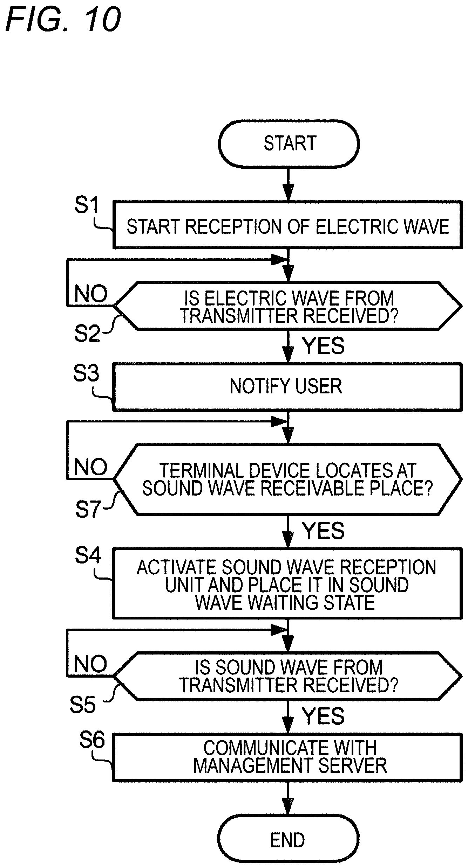

Fig. 10 is a flowchart showing the flow of a processing performed by the terminal device 10. The control unit 11 of the terminal device 10 executes the processing of steps S1 to S3, whereby the radio communication unit 12 receives electric wave from the transmitter 20 and the user U is notified of the reception of electric wave. Then, it is determined whether or not the terminal device 10 is in the sound wave receivable state (step S7). When the light quantity represented by the light quantity data supplied from the sensor unit 18 is less than the threshold value, the control unit 11 determines "NO" in the processing of step S7 and waits. In contrast, when the light quantity represented by the light quantity data supplied from the sensor unit 18 is the threshold value or more, the control unit 11 determines "YES" in the processing of step S7 and the processing proceeds to step S4. That is, after the electric wave is received from the transmitter 20 and the user U is notified of the reception of electric wave, when the control unit 11 determines that the terminal device 10 is in the sound wave receivable state, the control unit 11 activates the sound wave reception unit 100 to thereby place it in the standby state for receiving sound wave. Thereafter, the control unit 11 executes the processing of steps S5 and S6 by the same procedure as the first embodiment.

In the visit detection system 1 according to the second embodiment explained above, after the reception of electric wave from the transmitter 20, the terminal device 10 activates the sound wave reception unit 100 when the terminal device 10 is placed in the state substantially capable of receiving sound wave from the transmitter 20. Thus, the terminal device 10 can save the unnecessary power consumption corresponding to a period during which the terminal device 10 is not in the sound wave receivable state and hence the sound wave reception unit 100 is not activated.

Incidentally, the sensor unit 18 may be realized by a sensor other than the brightness sensor. For example, the sensor unit 18 may be realized by one of an acceleration sensor, an inclination sensor, a geomagnetism sensor and an attitude sensor, as a sensor for detecting the change of the posture of the terminal device 10. This is because when the user U holds the terminal device 10 by the hand, the posture of the terminal device 10 highly likely changes according to the movement of the hand of the user U. In this case, when the sensor unit 18 detects the posture change satisfying a predetermined condition, the determination unit 114 of the control unit 11 determines that the terminal device 10 is in the sound wave receivable state. Alternatively, the sensor unit 18 may be realized by a sensor which detects a force acting on the casing of the terminal device 10 when the user U holds the terminal device 10 by the hand. In this case, when the sensor unit 18 detects a force equal to or larger than a threshold value acting on the casing of the terminal device 10, the determination unit 114 determines that the terminal device 10 is in the sound wave receivable state.

Alternatively, the determination unit 114 may determine whether or not the terminal device 10 is in the sound wave receivable state without using the detection result of the sensor unit 18. In this case, the terminal device 10 may not include the sensor unit 18. For example, when the terminal device 10 is in an operation state where the user U operates the terminal device 10 or in a display state where the terminal device 10 displays an image on the screen, the determination unit 114 determines that the terminal device 10 is in the sound wave receivable state.

As explained above, the concrete method of realizing the determination performed by the determination unit 114, as to whether or not the terminal device 10 is in the sound wave receivable state, is not particularly limited.

### Third Embodiment

The visit detection system 1 according to the third embodiment, which is not forming part of the invention as claimed, will be explained.

For example, according to the technique of Bluetooth, it is known that a distance between a data transmission point and a data reception point can be estimated (calculated) based on the intensity of a received signal (that is, reception intensity of electric wave) at the time of receiving the data. Thus, in the visit detection system 1 of this embodiment, the terminal device 10 operates according to the distance from the transmitter 20 based on electric wave received from the transmitter 20. The hardware configurations of the terminal device 10, the transmitter 20 and the management server 30 in this embodiment are same as those of the first embodiment. The operations of the transmitter 20 and the management server 30 in this embodiment are same as those of the first embodiment.

In this embodiment, constituent elements and processing steps marked with the same symbols with those of the first embodiment act in the same manner as the first embodiment. Hereinafter, the visit detection system 1 according to this embodiment will be explained mainly as to differences from the first embodiment.

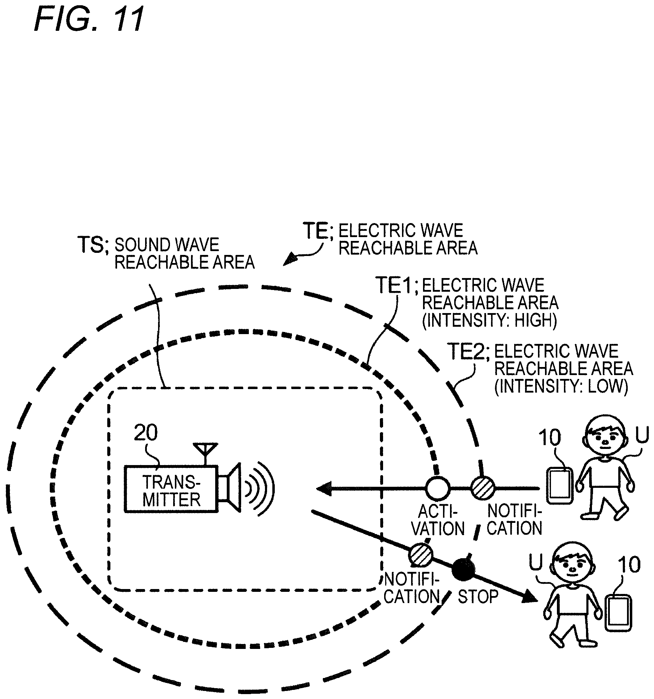

Fig. 11 is a diagram for explaining the positional change of the user U. As shown in Fig. 11, the electric wave reachable area TE is configured by an electric wave reachable area TE1 in which the reception intensity of electric wave from the transmitter 20 is relatively high and an electric wave reachable area TE2 in which the reception intensity of electric wave from the transmitter 20 is relatively low. The electric wave reachable area TE1 is smaller in the distance from the transmitter 20 than the electric wave reachable area TE2. Hereinafter, the reception intensity of electric wave in the electric wave reachable area TE1 is represented by "high" and the reception intensity of electric wave in the electric wave reachable area TE2 is represented by "low". The electric wave reachable areas TE1 and TE2 may be classified based on an arbitrary level of the reception intensity.

Next, the explanation will be made as to the operation of the terminal device 10 when the user U visits the store 200.

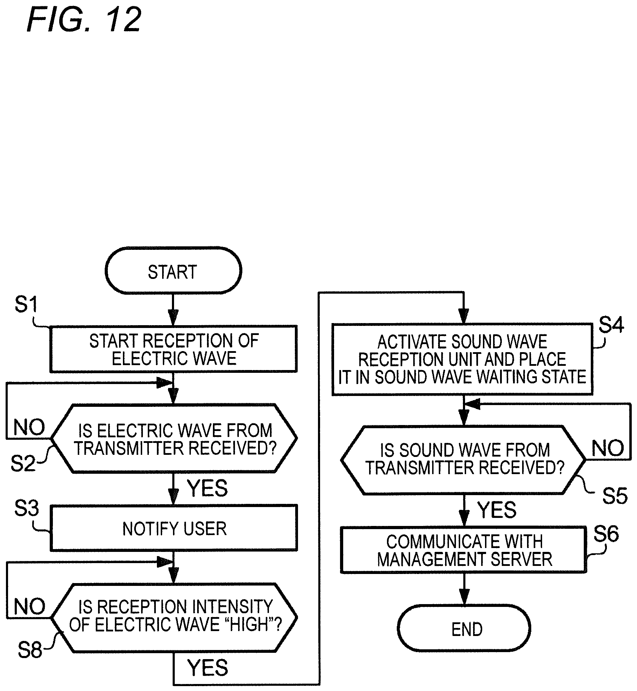

Fig. 12 is a flowchart showing the flow of a processing performed by the terminal device 10. The control unit 11 of the terminal device 10 executes the processing of steps S1 to S3, whereby the radio communication unit 12 receives electric wave from the transmitter 20 and then the user U is notified of the reception of electric wave. As shown in Fig. 11, the control unit 11 notifies the user U of the reception of electric wave when the user U moves within the electric wave reachable area TE2 from the outside of the electric wave reachable area TE2.

Next, the control unit 11 determines whether or not the reception intensity of electric wave is "high" (step S8). In other words, the control unit 11 determines whether or not the user U moves within the electric wave reachable areas TE1. When the control unit 11 determines that the reception intensity of electric wave from the transmitter 20 is not "high", that is, the reception intensity is "low" or electric wave is not received (NO in step S8), the processing is waited. On the other hand, when the control unit 11 determines that the reception intensity of electric wave from the transmitter 20 is "high" (YES in step S8), the processing proceeds to step S4. That is, after electric wave from the transmitter 20 is received and the user U is notified of the reception of electric wave, when it is determined that the distance from the transmitter 20 is less than the predetermined distance based on the reception intensity of electric wave, the control unit 11 activates the sound wave reception unit 100 to thereby place it in the standby state for receiving sound wave. Then, the control unit 11 executes the processing of steps S5 and S6 by the same procedure as the first embodiment.

Subsequently, the explanation will be made as to the operation of the terminal device 10 when the user U leaves the store 200.

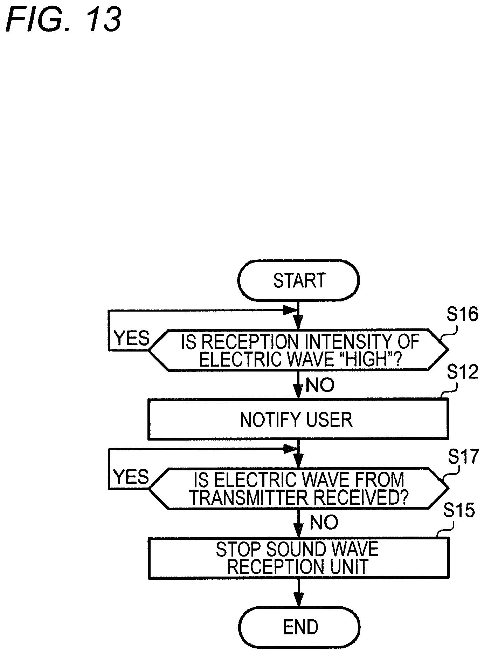

Fig. 13 is a flowchart showing the flow of a processing performed by the terminal device 10. First, the control unit 11 determines whether or not the reception intensity of electric wave transmitted from the transmitter 20 is "high" (step S16). When the user U exists within the electric wave reachable area TE1, the control unit 11 determines "YES" in the processing of step S16 and the processing is waited. Thereafter, when the user U moves within the electric wave reachable area TE2, the control unit 11 determines that the reception intensity of electric wave transmitted from the transmitter 20 is not "high" (NO in step S16), and the notification is made by the notification unit 16 to the user U (step S12).

Next, the control unit 11 determines whether or not the radio communication unit 12 receives electric wave from the transmitter 20 (step S17). When the control unit 11 determines that electric wave from the transmitter 20 is received (YES in step S17), the processing is waited. In contrast, when the control unit 11 determines that the reception of electric wave from the transmitter 20 has stopped (NO in step S17), the control unit 11 stops the sound wave reception unit 100 (step S15). As shown in Fig. 11, the control unit 11 stops the sound wave reception unit 100 when the user U moves to the outside of the electric wave reachable area TE1 from the inside of the electric wave reachable area TE1.

In the visit detection system 1 according to the third embodiment explained above, when the user U visits the store, the terminal device 10 activates the sound wave reception unit 100 when it is determined that the distance from the transmitter 20 is less than the predetermined distance based on the reception intensity of electric wave from the transmitter 20. Since the terminal device 10 activates the sound wave reception unit 100 after the user approaches the area capable of receiving sound wave, the power consumption in the standby state for receiving sound wave can be further reduced. Further, when the user U leaves the store, in the case where it is determined that the distance from the transmitter 20 is the predetermined distance or more based on the reception intensity of electric wave from the transmitter 20, the user U is notified of this determination. Thus, the terminal device 10 can perform the notification to the user U and stop the sound wave reception unit 100 more quickly than the first embodiment.

This operation of the terminal device 10 according to the distance between the terminal device 10 and the transmitter 20 explained in the third embodiment may be applied to the terminal device 10 explained in the second embodiment.

### Modified Examples

The present invention may be implemented in modes different from the aforesaid embodiments. For example, the present invention may be implemented according to modified examples 1 and 6. The invention as claimed does not cover modified examples 2, 3, 4, 5, 7, 8 and 9.

### (Modified Example 1)

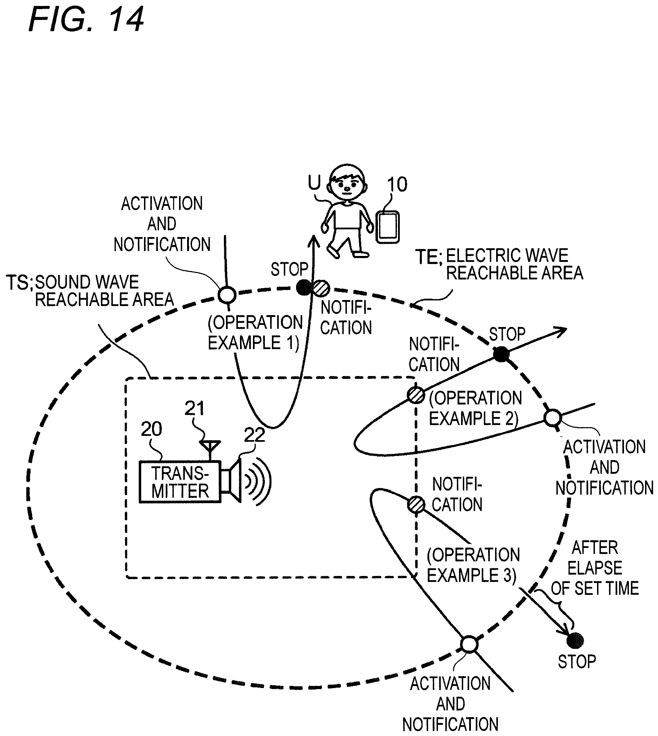

When the user U leaves the store, the terminal device 10 according to the first embodiment may be modified so as to operate according to one of an (operation example 1) to an (operation example 3) explained below. Fig. 14 is a diagram for explaining a relation between the position of the user U and the operation of the terminal device 10. In Fig. 14, "activation and notification" means a timing at which the notification to the user U and the activation of the sound wave reception unit 100 is performed in the case where electric wave from the transmitter 20 is received. "Notification" means a timing at which the notification to the user U is performed before the sound wave reception unit 100 stops. "Stop" means a timing at which the sound wave reception unit 100 is stopped.

As shown in Fig. 14, in the (operation example 1), when it is determined that the user U moves to the outside of the electric wave reachable area TE and the reception of electric wave from the transmitter 20 has stopped, the control unit 11 of the terminal device 10 notifies the user U of the determination and stops the sound wave reception unit 100. In the (operation example 2), when it is determined that the user U moves to the outside of the sound wave reachable area TS and the reception of sound wave from the transmitter 20 has stopped, the control unit 11 of the terminal device 10 notifies the user U of the determination. Further, when it is determined that electric wave from the transmitter 20 is not received, the control unit 11 stops the sound wave reception unit 100. The (operation example 3) differs from the (operation example 2) in a point that when a set time elapses after it is determined that the reception of electric wave from the transmitter 20 has stopped, the control unit 11 stops the sound wave reception unit 100.

As explained above, when the user leaves the store, various modifications can be performed as to the timing at which the terminal device 10 performs the notification to the user U and the timing at which the terminal device 10 stops the sound wave reception unit 100. However, these cases are common in a point that the terminal device 10 performs the notification to the user U and stops the sound wave reception unit 100 on condition that the reception of electric wave or sound wave has stopped.

The user U may selectively set one of the first embodiment and these operation examples 1 to 3 by which the terminal device 10 is to be operated.

### (Modified Example 2)

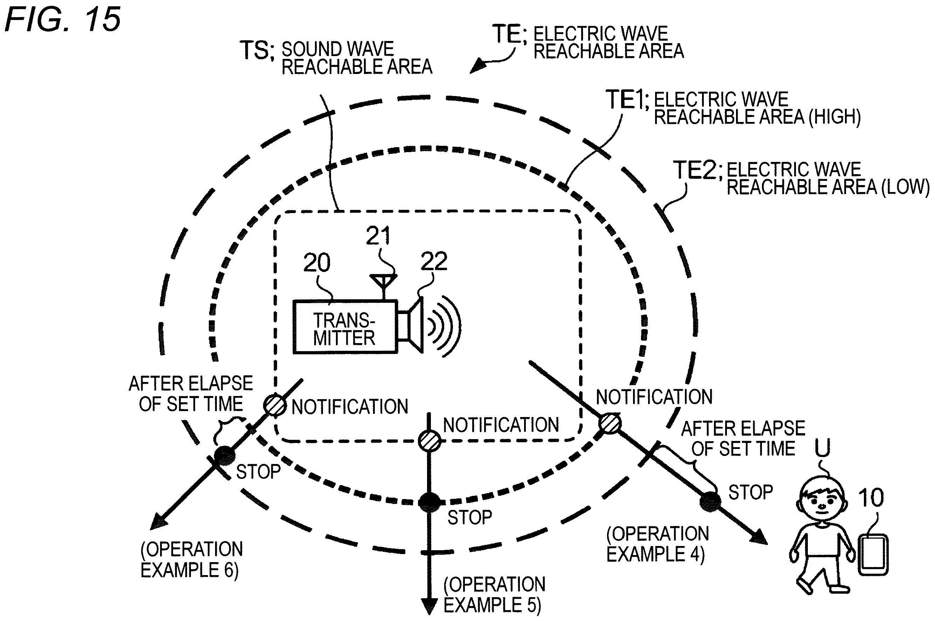

When the user U leaves the store, the terminal device 10 according to the third embodiment may be modified so as to operate according to one of an (operation example 4) to an (operation example 6) explained below. Fig. 15 is a diagram for explaining a relation between the position of the user U and the operation of the terminal device 10.

In the (operation example 4), when it is determined that the user U moves to the outside of the electric wave reachable area TE1 and the reception intensity of electric wave from the transmitter 20 changes from "high" to "low", the control unit 11 of the terminal device 10 notifies the user U of the determination. Then, the control unit 11 stops the sound wave reception unit 100 when a set time elapses after it is determined that the reception of electric wave from the transmitter 20 has stopped. In the (operation example 5), when it is determined that the reception of sound wave from the transmitter 20 has stopped, the control unit 11 notifies the user U of the determination. Then, the control unit 11 stops the sound wave reception unit 100 when it is determined that the reception intensity of electric wave from the transmitter 20 changes from "high" to "low". The (operation example 6) differs from the (operation example 5) in a point that when a set time elapses after it is determined that the reception intensity of electric wave from the transmitter 20 changes from "high" to "low", the control unit 11 stops the sound wave reception unit 100.

As explained above, when the user leaves the store, various modifications can be performed as to the timing at which the terminal device 10 performs the notification to the user U and the timing at which the terminal device 10 stops the sound wave reception unit 100. However, these cases are common in a point that the terminal device 10 determines the notification timing to the user U or the stop timing of the sound wave reception unit 100 based on the reception intensity of electric wave.

The user U may selectively set one of the third embodiment and these operation examples 4 to 6 by which the terminal device 10 is to be operated.

### (Modified Example 3)

In a shopping mall where plural stores are collected, for example, electric wave reachable areas formed by two or more stores may be overlapped.

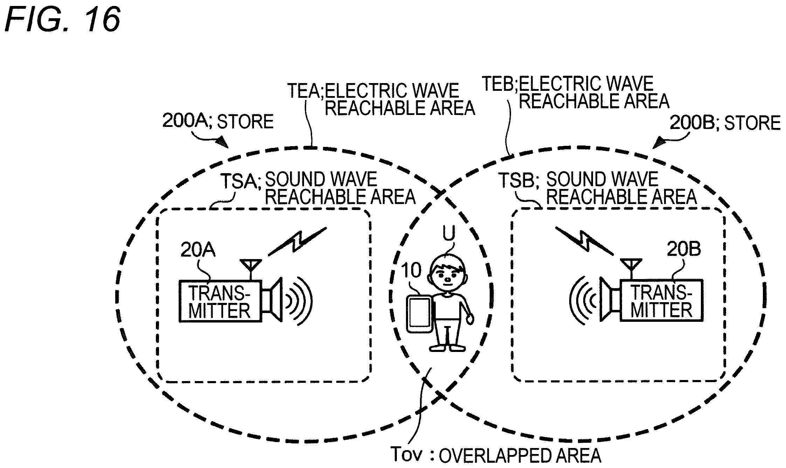

Fig. 16 is diagram for explaining the position of the user U. As shown in Fig. 16, it is supposed that a store 200A and a store 200B are close to each other. A transmitter 20A and a transmitter 20B are installed within the store 200A and the store 200B, respectively. The transmitter 20A forms an electric wave reachable area TEA and a sound wave reachable area TSA. The transmitter 20B forms an electric wave reachable area TEB and a sound wave reachable area TSB. Further, the electric wave reachable area TEA and the electric wave reachable area TEB are partially overlapped to form an overlapped area Tov.

In this case, the terminal device 10 carried by the user U existing in the overlapped area Tov receives electric wave from each of the transmitters 20A and 20B. In this case, the control unit 11 of the terminal device 10 activates the service application program SA based on electric wave from one of the transmitters 20A and 20B corresponding to the higher reception intensity of electric wave. This is because it is supposed that the user U most likely exists within the store or is going to visit this store in which the transmitter corresponding to the higher reception intensity of electric wave is installed.

As another method, the terminal device 10 existing in the overlapped area Tov may obtain the store identification codes based on electric wave received from the transmitters 20A and 20B and activate the service application program SA based on the obtained two store identification codes.

In the case where three or more electric wave reachable areas are overlapped, the terminal device 10 may also activate the service application program SA based on electric wave from one of the transmitters 20 corresponding to the highest reception intensity of electric wave. Alternatively, the terminal device 10 may obtain store identification codes based on electric wave received from all the transmitters and activate the service application program SA.

### (Modified Example 4)

The visit detection system 1 may detect the visit to the store based on optical wave instead of sound wave. Optical wave also differs from electric wave in an ability of penetrating an obstacle such as a wall, a door or a partition, for example. In most case, as compared with electric wave, optical wave has physical properties that it is lower in penetrating ability, more excellent in straight travelling properties and less likely diffracts. In the case of using optical wave in place of sound wave, the configuration relating to sound wave of the visit detection system 1 according to each of the aforesaid embodiments may be replaced by configuration relating to optical wave. Hereinafter, the explanation will be made as to a case where the configuration relating to sound wave of the visit detection system 1 according to the first embodiment is replaced by the configuration relating to optical wave.

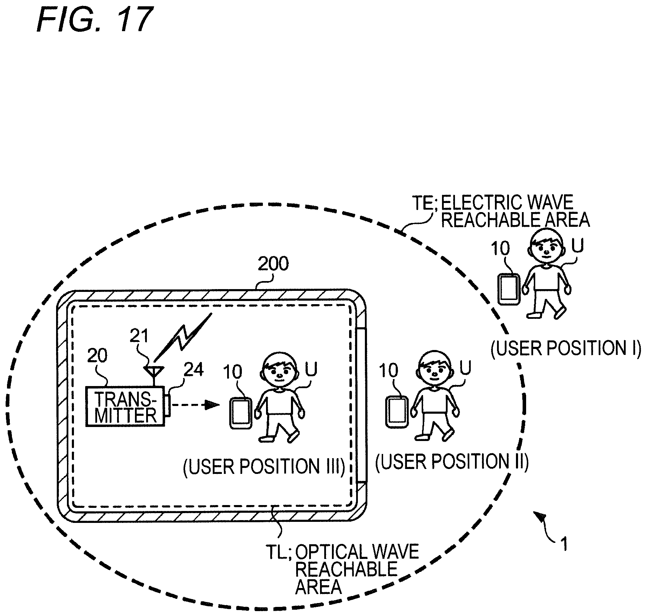

Fig. 17 is a block diagram showing the entire configuration of the visit detection system 1 according to this modified example. As shown in Fig. 17, the transmitter 20 includes a light emission unit 24 as an optical wave transmission unit emitting optical wave, in place of the speaker 22. When the terminal device 10 approaches the transmitter 20 within a distance capable of communicating using optical wave, the terminal device 10 receives optical wave transmitted from the light emission unit 24 of the transmitter 20. An area TL to which optical wave transmitted from the light emission unit 24 of the transmitter 20 is reachable (hereinafter referred to "optical wave reachable area") is contained within the premises of the store 200, for example, and the entirety of this area is contained within the electric wave reachable area TE.

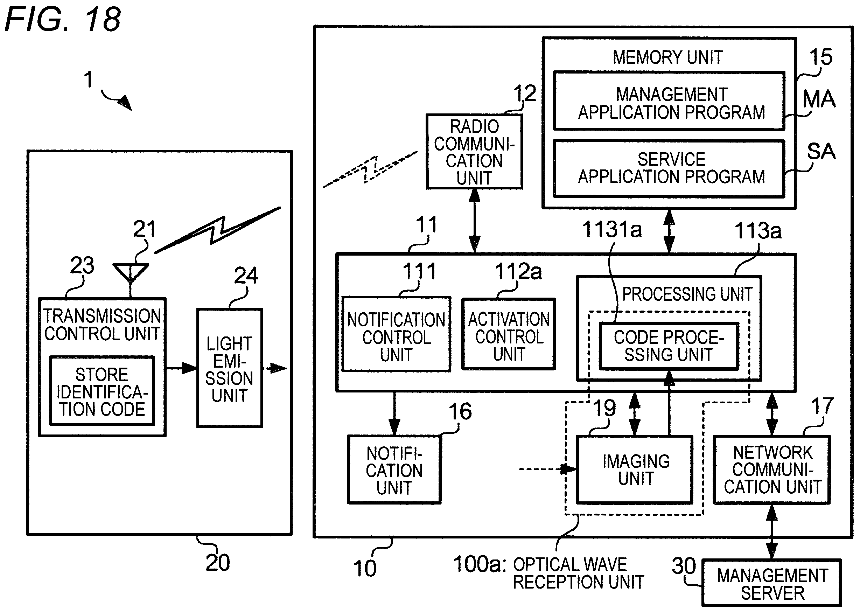

Fig. 18 is a block diagram showing the configuration of the visit detection system 1.

First, the configuration of the transmitter 20 will be explained. As shown in Fig. 18, the transmitter 20 includes the antenna 21, the light emission unit 24 and the transmission control unit 23. The light emission unit 24 is, for example, a light emitting diode (LED) and transmits optical wave according to the control of the transmission control unit 23. The transmission control unit 23 controls the information transmission using electric wave and optical wave. The information transmission using optical wave will be explained. The transmission control unit 23 transmits, from the light emission unit 24, optical wave formed by blinking an infrared ray or a visible ray, for example. The transmission control unit 23 transmits optical wave uniquely related to the store identification code to be distributed.

Next the configuration of the terminal device 10 will be explained. As shown in Fig. 18, the terminal device 10 includes an imaging unit 19 in place of the microphone 13 and the AID converter 14 explained in the first embodiment. The imaging unit 19 is an imaging device (digital camera) for performing imaging. The imaging unit performs an imaging processing of generating imaged data representing an imaged image and supplying the data to the control unit 11. The control unit 11 operates the management application program MA to thereby realize functions corresponding to a notification control unit 111, an activation control unit 112a and a processing unit 113a. The processing unit 113a realizes a code processing unit 1131a which performs a code processing for obtaining the store identification code transmitted from the transmitter 20 by means of optical wave.

The activation control unit 112a activates an optical wave reception unit 100a to thereby place it in a standby state for receiving optical wave on condition that electric wave transmitted from the transmitter 20 is received by the radio communication unit 12. The optical wave reception unit 100a is a unit (optical wave receiver) for receiving optical wave when it is placed in the standby state for receiving optical wave. To be concrete, the optical wave reception unit 100a is realized by the imaging unit 19 and the code processing unit 1131a. When the optical wave reception unit 100a is placed in the standby state for receiving optical wave, the imaging unit 19 performs the imaging processing and the code processing unit 1131a performs the code processing.

When the optical wave reception unit 100a receives optical wave from the transmitter 20, the processing unit 113a performs a particular processing based on the received optical wave. The code processing unit 1131a of the processing unit 113a performs the code processing of analyzing the imaged data supplied from the imaging unit 19 to thereby obtain the store identification code. The processing unit 113a activates the service application program SA corresponding to the store identification code obtained by the code processing and performs a processing based on the activated service application program SA.

Next, the explanation will be made as to the operation of the terminal device 10 when the user U visits the store 200.

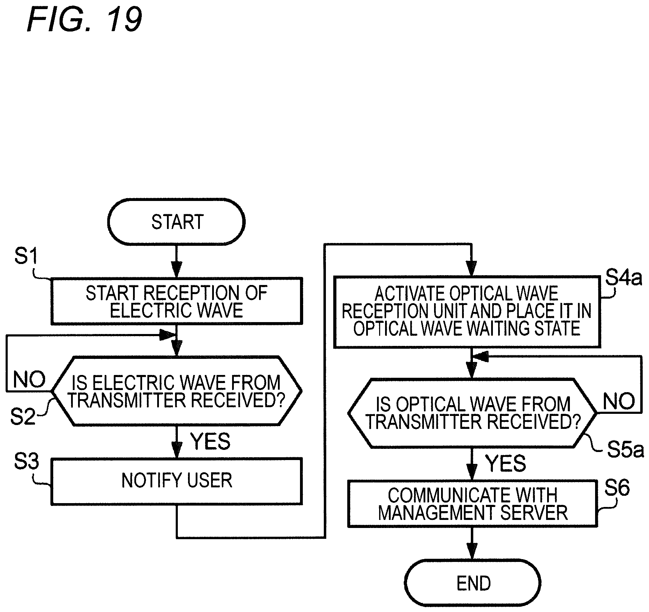

Fig. 19 is a flowchart showing the flow of a processing performed by the terminal device 10. The control unit 11 of the terminal device 10 executes the processing of steps S1 to S3, whereby the radio communication unit 12 receives electric wave from the transmitter 20 and the user U is notified of the reception of electric wave. Then, the optical wave reception unit 100a is activated and is placed in the standby state for receiving optical wave (step S4a). In the processing of step S4a, the control unit 11 specifies, based on the management application program MA, the service application program SA corresponding to the store identification code obtained by the reception of electric wave, and activates the specified service application program. Next, the control unit 11 determines whether or not optical wave from the transmitter 20 is received by the optical wave reception unit 100a (step S5a). In the processing of step S5a, the control unit 11 determines presence or absence of the reception of optical wave from the transmitter 20 depending on whether or not the optical wave reception unit 100a obtains the store identification code by the code processing. The control unit 11 waits until it is determined that optical wave from the transmitter 20 is received (NO in step S5a). Thereafter, when the user U moves within the optical wave reachable area TL and turns the imaging unit 19 toward the light emission unit 24 of the transmitter 20, the control unit 11 determines that optical wave from the transmitter 20 is received (YES in step S5a). Then, the control unit 11 executes the processing of step S6 by the same procedure as the first embodiment, based on the store identification code obtained by the code processing.

Subsequently, the explanation will be made as to the operation of the terminal device 10 when the user U leaves the store 200.

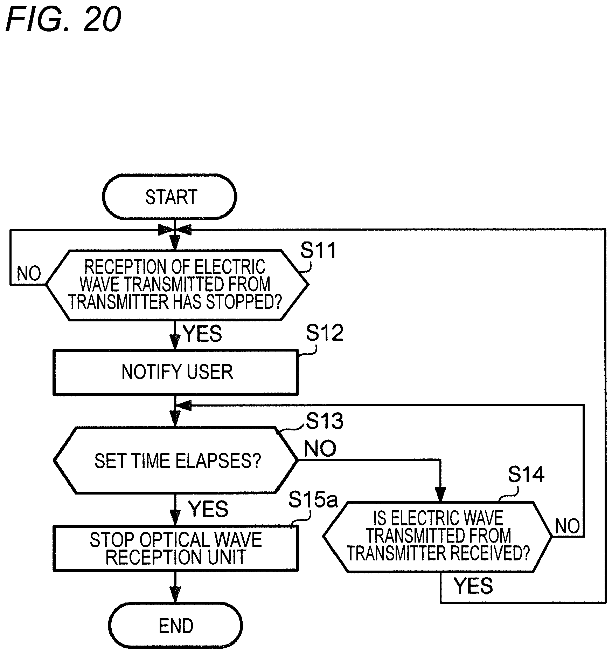

Fig. 20 is a flowchart showing the flow of a processing performed by the terminal device 10.

The control unit 11 determines whether or not the reception of electric wave from the transmitter 20 has stopped when the imaging unit 19 is placed in the standby state for receiving optical wave (step S11). When the user U moves to the outside of the electric wave reachable area TE, the control unit 11 determines "NO" in the processing of step S11 and notifies the user U by means of the notification unit 16 that the reception of electric wave from the transmitter 20 has stopped (step S12). Next, the control unit 11 determines whether or not a set time elapses after the reception of electric wave by the radio communication unit 12 stops or the notification is made to the user U by the processing of step S12 (step S13). When it is determined that electric wave from the transmitter 20 is not received (NO in step S14), the control unit 11 repeats the processing of step S13 and step S14 (NO in step S13 → NO in step S14 → NO in step S13 ...), until the set time elapses. When it is determined that the set time elapses without receiving again electric wave from the transmitter 20 (YES in step S13), the control unit 11 stops the optical wave reception unit 100a (step S15). In contrast, when it is determined that electric wave is received again before the lapse of the set time (YES in step S14), the process returns to the processing of step S11.

The configuration relating to optical wave in place of the configuration relating to sound wave may also be applied to the visit detection system 1 of each of the second and third embodiments, and also the aforesaid respective modified examples. The configuration and operation of the visit detection system 1 thus applied with this configuration relating to optical wave will be estimated from the explanation of this modified example.

### (Modified Example 5)

Although the sound wave reception unit 100 according to each of the embodiments includes the A/D converter 14 and the code processing unit 1131, the A/D converter 14 may be omitted. Even during stop of the sound wave reception unit 100, the control unit 11 may obtain an audio signal of a digital format from the A/D converter 14 based on sound wave detected by the microphone 13. Even in this case, when the sound wave reception unit 100 stops, since the code processing unit 1131 does not perform the code processing based on the received audio signal, the power consumption of the terminal device 10 an be reduced. In the case of applying the configuration of this modified example to the terminal device 10 of the second embodiment, the control unit 11 may determine whether or not the terminal device 10 exists within the sound wave receivable area based on the audio signal supplied from the microphone 13 during stop of the sound wave reception unit 100. For example, when the control unit 11 detects, based on the audio signal supplied from the microphone 13, sound satisfying a predetermined condition generated at the time of taking out the terminal device 10 from a pocket or a bag, it is determined that the terminal device 10 exists within the sound wave receivable area.

Further, although the optical wave reception unit 100a according to the modified example 4 includes the imaging unit 19 and the code processing unit 1131a, the imaging unit 19 may be omitted. Even in this case, when the sound wave reception unit 100 stops, since the code processing unit 1131a does not perform the code processing based on the received imaged data, the power consumption of the terminal device 10 can be reduced.

### (Modified Example 6)

The visit detection system 1 may detect, for example, the visit of a person to places explained below as well as the visit of a person to the store 200. The visit detection system 1 may detect that a person visits a place where many and unspecified persons get in and out, such as a commercial facility other than a store like an amusement park, a public facility such as a station or a town hall, an office or a hotel lobby. Alternatively, the visit detection system 1 may detect that a person visits a predetermined position (check point) in a stamp rally or a walk rally, for example. Further alternatively, the visit detection system 1 may detect that a person visits a place where specified persons get in and out, such as a company, a factory or a house.

Irrespective of the place where a person visits detected by the visit detection system 1, the transmitter 20 is merely required to transmit the store identification code for uniquely identifying the own device or the installation place thereof using electric wave or sound wave.

Alternatively, in order to distinguish between the electric wave reachable area with a relatively large range and the sound wave reachable area with a relatively small range, the transmitter 20 may transmits different information for each of these areas. In this case, the transmitter 20 may transmit, among plural information related hierarchically, the information of an upper level using electric wave and the information of a lower level using sound wave.

The explanation will be made as to an example where the transmitter 20 is installed in a vehicle such as a train or a bus (or various kinds of vehicles or various kinds of transport instruments) and transmits information. By distinguishing between the area within the vehicle and the area outside of the vehicle, the transmitter 20 transmits, to the terminal device 10 of the user U exiting in each of the respective areas, information usable for the user U corresponding to the existing area. For example, the transmitter 20 transmits, from the antenna 21, information such as destination of the vehicle and transfer guide including main route points (for example, stations or bus stops) towards the external space at the periphery of the vehicle (for example, space near the entrance) and the interior space of the vehicle (for example, passenger compartment). Further, the transmitter 20 transmits, from the speaker 22, information such as a next stop and geometrical information near the next stop toward the interior space of the vehicle. In this respect, the transmitter 20 does not transmit information from the speaker 22 toward the external space at the periphery of the vehicle.

### (Modified Example 7)

The visiting situation data transmitted to the management server 30 from the terminal device 10 may include various kinds of information usable for the marketing relating to the store.

The terminal device 10 may contain, within the visiting situation data, user specifying information (for example, user ID or name) capable of specifying the user U and user attribute information representing the attribute of the user U. The user attribute information is information such as age, sex, occupation and hobby. When the user U carrying the terminal device 10 performs electronic payment at the store 200 using electronic payment service, the terminal device 10 may contain settlement information representing the settlement state (purchased commodity and payment) within the visiting situation data. Further, the terminal device 10 may transmit to the management sever 30 the visiting situation data representing a visiting situation specified based on electric wave as well as the visiting situation specified based on sound wave. In this case, the management server 30 can detect more detailed visiting situation of the user U such as whether or not the user actually visits the store 200 and whether or not the user drops in the store but does not actually enter therein.

The management server 30 may analyze the visiting situation data received from the terminal device 10 to thereby generate information relating to the marketing and output the generated information to a predetermined output destination such as a computer device of a marketing company.

### (Modified Example 8)

The transmitter 20 and the terminal device 10 may perform radio communication (for example, short rang radio communication) conforming to the communication standard other than Bluetooth. For example, the transmitter 20 may transmit from the antenna 21 electric wave for performing the radio communication conforming to the Wi-Fi standard or other wireless LAN (Local Area Network) standard.

Instead of realizing the transmitter 20 so as to have the function of transmitting both sound wave and electric wave, the transmitter may be realized so as to be separately provided with a transmitter (electric wave transmitter) which transmits electric wave and a transmitter (sound wave transmitter) which transmits sound wave. In this case, the electric wave transmitter and the sound wave transmitter may be installed at different positions within the store 200.

The transmitter 20 may include a plurality of antennas having different transmission intensities of electric wave to transmit different identification codes from these antennas, respectively. In this case, the terminal device 10 can estimate the distance to the predetermined transmitter 20 (that is, transmission position) not based on the reception intensity of electric wave but based on the identification code received from the predetermined transmitter.

The medium of the transmission path of electric wave and sound wave transmitted from the transmitter 20 is not limited to gaseous body such as air but may contain solid body or liquid.

### (Modified Example 9)

The visit detection system 1 may include a plurality of the transmitters 20 so as to detect the visit of the user U to a plurality of the stores 200. Further, a plurality of the transmitters 20 may be installed within the premises of the store 200. In this case, these transmitters 20 transmit different identification codes respectively from different areas (for example, counters) within the premises of the store 200.

In each of the embodiments explained above, although the terminal device 10 performs the code processing based on the received sound wave, the terminal device 10 may perform a processing other than the code processing based on the received sound wave. For example, the terminal device 10 may perform a voice recognition processing or an analysis processing of acoustic fingerprint.

Although the explanation is made as to the case where the terminal device 10 activates the sound wave reception unit 100 after the notification to the user U when the user U visits the store, the present examples are not limited thereto. For example, the notification to the user U and the activation of the sound wave reception unit 100 may be performed simultaneously, or the notification to the user U may be performed after the activation of the sound wave reception unit 100.

Further, the terminal device 10 may omit the notification to the user U in the case of stopping the sound wave reception unit 100.

As to the activation control of the sound wave reception unit 100 performed based on the information received from the transmitter 20, the terminal device 10 performs the activation of the sound wave reception unit 100 but may not perform the stopping of the sound wave reception unit 100.

The terminal device 10 is not limited to the smartphone and may be other terminal device portable by the user (that is, portable terminal device) such as a mobile phone terminal, a tablet terminal, a personal computer, a PDA (Personal Digital Assistant), a mobile computer, a portable game machine or a portable music player.

The function performed by each of the control unit 11 of the terminal device 10 and the 23 of the transmitter 20 may be realized by the combination of a plurality of programs or the cooperation of a plurality of hardware resources. In the case of realizing the function of each of the control unit 11 and the transmission control unit 23 by the programs, the programs may be distributed via a network or may be provided in a state of being stored in a computer readable recording medium such as a magnetic recording medium (a magnetic tape, a magnetic disc (HDD (Hard Disk Drive), an FD (Flexible Disc) etc.), an optical recording medium (an optical disc etc.), a magnetooptical recording medium or a semiconductor memory. Reference Signs List
- 1: visit detection system
- 10: terminal device
- 11: control unit
- 111: notification control unit
- 112, 112a: activation control unit
- 113, 113a: processing unit
- 1131, 1131a: code processing unit
- 12: radio communication unit
- 13: microphone
- 14: A/D converter
- 15: memory unit
- 16: notification unit
- 17: network communication unit
- 18: sensor unit
- 19: imaging unit
- 20: transmitter
- 21: antenna
- 22: speaker
- 23: transmission control unit
- 24: light emission unit
- 30: management server
- 100: sound wave reception unit
- 100a: optical wave reception unit
- 200, 200A, 200B: store

## Claims

1. A computer implemented method of controlling a terminal device (10) that comprises a control unit (11) configured to control the steps of the method, a sound wave receiver (100) configured to receive a sound wave, an electric wave receiver (12) configured to receive an electric wave and a network communication unit (17) configured to communicate with a management server (30) over a network, the method comprising:
receiving (S1) the electric wave by the electric wave receiver (12);
the method being **characterized by** the steps:
notifying (S3) a user (U) when an identification code contained in the received electric wave is detected (S2);
activating (S4) the sound wave receiver (100) to receive the sound wave on condition that the identification code is detected in the received electric wave; and
determining (S5) whether or not the terminal device (10) is in an area (TS) in which the sound wave including the identification code is received by the terminal device (10); wherein
when it is determined that the terminal device (10) is in said area (TS) in which the sound wave including the identification code is received by sound wave receiver (100) of the terminal device (10) after the notification to the user (U), the management server (30) is accessed via the network communication unit (17) and data representing a visit of the user is transmitted to the management server (30) (S6).

2. The method according to claim 1, wherein
the sound wave receiver (100) is stopped based on the received electric wave after the activation of the sound wave receiver (100).

3. The method according to claim 2, wherein
the sound wave receiver (100) is stopped on condition that a distance from a transmission position of the electric wave is a predetermined value or more.

4. The method according to claim 2, wherein
the sound wave receiver (100) is stopped when a state where the electric wave is not received continues a set time period.

5. The method according to claim 1, further comprising
performing a specific processing based on sound wave received by the sound wave receiver within a reachable area of the electric wave.

6. The method according to claim 1, wherein
it is determined whether or not the terminal device (10) is in the sound wave receivable state based on a signal detected by at least one sensor (18) of a brightness sensor, an acceleration sensor, an inclination sensor, a geomagnetism sensor and an attitude sensor.

7. The method according to claim 1, wherein
it is determined that the terminal device (10) is in the sound wave receivable state in a case of an operation state where the terminal device (10) is operated by the user (U) or a display state where an image is displayed on a screen of the terminal device (10).

8. A program for controlling a computer in a terminal device (10) that comprises a control unit (11) configured to control the steps of the method, a sound wave receiver (100) configured to receive a sound wave, an electric wave receiver (12) configured to receive an electric wave and a network communication unit (17) configured to communicate with a management server (30) over a network, the program comprising:
receiving the electric wave by the electric wave receiver (12);
**characterized in that** the program causes the computer to function as:
a notification controller (111), configured to notify a user (U) when an identification code contained in the electric wave received by the electric wave receiver (12) is detected; and
an activation controller (112), configured to activate the sound wave receiver (100) on condition that the identification code is detected in the received electric wave;
a determination unit (114), configured to determine whether or not the terminal device (10) is in an area (TS) in which the sound wave including the identification code is received by the terminal device (10), wherein
when the determination unit (114) determines that the terminal device (10) is in said area in which the sound wave including the identification code is received by the terminal device (10) after the notification performed by the notification controller (111), the management server (30) is accessed via the network communication unit (17) and data representing a visit of the user is transmitted to the management server (30).

9. The program according to claim 8, wherein
the activation controller (112) stops the sound wave receiver (100) based on the electric wave received by the electric wave receiver (12) after the activation of the sound wave receiver (100).

10. The program according to claim 9, wherein
the activation controller (112) stops the sound wave receiver (100) on condition that a distance from a transmission position of the electric wave is a predetermined value or more.

11. The program according to claim 9, wherein
the activation controller (112) stops the sound wave receiver (100) when a state where the electric wave is not received by the electric wave receiver continues a set time period.

12. The program according to claim 8, wherein the program causes the computer to further function as
a processor, configured to perform a specific processing based on sound wave received by the sound wave receiver (100) within a reachable area (TS) of the electric wave.

13. The program according to claim 8, wherein
the determination unit (114) includes at least one sensor (18) of a brightness sensor, an acceleration sensor, an inclination sensor, a geomagnetism sensor and an attitude sensor, and determines whether or not the terminal device (10) is in the sound wave receivable state based on a signal detected by the at least one sensor.

14. The program according to claim 8, wherein
the determination unit (114) determines that the terminal device (10) is in the sound wave receivable state in a case of an operation state where the terminal device (10) is operated by the user (U) or a display state where an image is displayed on a screen of the terminal device (10).

## Patentansprüche

1. Computerimplementiertes Verfahren zur Steuerung eines Endgeräts (10), das eine Steuereinheit (11), die so konfiguriert ist, dass sie die Schritte des Verfahrens steuert, einen Schallwellenempfänger (100), der so konfiguriert ist, dass er eine Schallwelle empfängt, einen Elektrowellenempfänger (12), der so konfiguriert ist, dass er eine Elektrowelle empfängt, und eine Netzwerkkommunikationseinheit (17) umfasst, die so konfiguriert ist, dass sie mit einem Verwaltungsserver (30) über ein Netzwerk kommuniziert, wobei das Verfahren umfasst:
Empfangen (S1) der Elektrowelle durch den Elektrowellenempfänger (12);
wobei das Verfahren durch die folgenden Schritte gekennzeichnet ist:
Benachrichtigen (S3) eines Benutzers (U), wenn ein in der empfangenen Elektrowelle enthaltener Identifikationscode erkannt (S2) wird;
Aktivieren (S4) des Schallwellenempfängers (100), um die Schallwelle unter der Bedingung zu empfangen, dass der Identifikationscode in der empfangenen Elektrowelle erkannt wird; und
Bestimmen (S5), ob sich das Endgerät (10) in einem Bereich (TS), in dem die Schallwelle, die den Identifikationscode einschließt, von dem Endgerät (10) empfangen wird, befindet oder nicht; wobei
wenn bestimmt wird, dass sich das Endgerät (10) in dem Bereich (TS) befindet, in dem die Schallwelle, die den Identifikationscode einschließt, von dem Schallwellenempfänger (100) des Endgeräts (10) nach der Benachrichtigung des Benutzers (U) empfangen wird, über die Netzwerkkommunikationseinheit (17) auf den Verwaltungsserver (30) zugegriffen wird und Daten, die einen Besuch des Benutzers darstellen, an den Verwaltungsserver (30) übertragen werden (S6).

2. Verfahren nach Anspruch 1, wobei
der Schallwellenempfänger (100) basierend auf der empfangenen Elektrowelle nach der Aktivierung des Schallwellenempfängers (100) angehalten wird.

3. Verfahren nach Anspruch 2, wobei
der Schallwellenempfänger (100) unter der Bedingung angehalten wird, dass ein Abstand von einer Übertragungsposition der Elektrowelle einen vorbestimmten Wert oder mehr beträgt.

4. Verfahren nach Anspruch 2, wobei
der Schallwellenempfänger (100) angehalten wird, wenn ein Zustand, in dem die Elektrowelle nicht empfangen wird, eine festgelegte Zeitperiode andauert.

5. Verfahren nach Anspruch 1, weiter umfassend
Durchführen einer spezifischen Verarbeitung basierend auf der von dem Schallwellenempfänger empfangenen Schallwelle innerhalb eines erreichbaren Bereichs der Elektrowelle.

6. Verfahren nach Anspruch 1, wobei
bestimmt wird, ob sich das Endgerät (10) in dem die Schallwellen empfangenden Zustand befindet oder nicht, basierend auf einem Signal, das von mindestens einem Sensor (18) eines Helligkeitssensors, eines Beschleunigungssensors, eines Neigungssensors, eines Geomagnetismus-Sensors und eines Lagesensors erkannt wird.

7. Verfahren nach Anspruch 1, wobei
bestimmt wird, dass sich das Endgerät (10) in dem die Schallwellen empfangenden Zustand befindet, in einem Fall eines Betriebszustands, in dem das Endgerät (10) von dem Benutzer (U) bedient wird, oder eines Anzeigezustands, in dem ein Bild auf einem Bildschirm des Endgeräts (10) angezeigt wird.

8. Programm zum Steuern eines Computers in einem Endgerät (10), das eine Steuereinheit (11), die so konfiguriert ist, dass sie die Schritte des Verfahrens steuert, einen Schallwellenempfänger (100), der so konfiguriert ist, dass er eine Schallwelle empfängt, einen Elektrowellenempfänger (12), der so konfiguriert ist, dass er eine Elektrowelle empfängt, und eine Netzwerkkommunikationseinheit (17) umfasst, die so konfiguriert ist, dass sie mit einem Verwaltungsserver (30) über ein Netzwerk kommuniziert, wobei das Programm umfasst:
Empfangen der Elektrowelle durch den Elektrowellenempfänger (12);
**dadurch gekennzeichnet, dass** das Programm den Computer veranlasst, zu funktionieren als:
eine Benachrichtigungssteuerung (111), die so konfiguriert ist, dass sie einen Benutzer (U) benachrichtigt, wenn ein Identifikationscode erkannt wird, der in der von dem Elektrowellenempfänger (12) empfangenen Elektrowelle enthalten ist; und
eine Aktivierungssteuerung (112), die so konfiguriert ist, dass sie den Schallwellenempfänger (100) unter der Bedingung aktiviert, dass der Identifikationscode in der empfangenen Elektrowelle erkannt wird;
eine Bestimmungseinheit (114), die so konfiguriert ist, dass sie bestimmt, ob sich das Endgerät (10) in einem Bereich (TS), in dem die Schallwelle, die den Identifikationscode einschließt, von dem Endgerät (10) empfangen wird, befindet oder nicht, wobei
wenn die Bestimmungseinheit (114) bestimmt, dass sich das Endgerät (10) in dem Bereich befindet, in dem die Schallwelle, die den Identifikationscode einschließt, von dem Endgerät (10) nach der von der Benachrichtigungssteuerung (111) durchgeführten Benachrichtigung empfangen wird, wird über die Netzwerkkommunikationseinheit (17) auf den Verwaltungsserver (30) zugegriffen und Daten, die einen Besuch des Benutzers darstellen, werden an den Verwaltungsserver (30) übertragen.

9. Programm nach Anspruch 8, wobei
die Aktivierungssteuerung (112) den Schallwellenempfänger (100) basierend auf der von dem Elektrowellenempfänger (12) empfangenen Elektrowelle nach der Aktivierung des Schallwellenempfängers (100) anhält.

10. Programm nach Anspruch 9, wobei
die Aktivierungssteuerung (112) den Schallwellenempfänger (100) unter der Bedingung anhält, dass ein Abstand von einer Übertragungsposition der Elektrowelle einen vorbestimmten Wert oder mehr beträgt.

11. Programm nach Anspruch 9, wobei
die Aktivierungssteuerung (112) den Schallwellenempfänger (100) anhält, wenn ein Zustand, in dem die Elektrowelle nicht von dem Elektrowellenempfänger empfangen wird, eine festgelegte Zeitperiode andauert.

12. Programm nach Anspruch 8, wobei das Programm den Computer veranlasst, weiter zu funktionieren als
ein Prozessor, der konfiguriert ist, um eine spezifische Verarbeitung basierend auf einer vom Schallwellenempfänger (100) empfangenen Elektrowelle innerhalb eines erreichbaren Bereichs (TS) der Elektrowelle durchzuführen.

13. Programm nach Anspruch 8, wobei
die Bestimmungseinheit (114) mindestens einen Sensor (18) eines Helligkeitssensors, eines Beschleunigungssensors, eines Neigungssensors, eines Geomagnetismus-Sensors und eines Lagesensors einschließt und basierend auf einem von dem mindestens einen Sensor eingeschlossenen Signal bestimmt, ob sich das Endgerät (10) in dem die Schallwellen empfangenden Zustand befindet oder nicht.

14. Programm nach Anspruch 8, wobei
die Bestimmungseinheit (114) bestimmt, dass sich das Endgerät (10) in dem die Schallwellen empfangenden Zustand befindet, in einem Fall eines Betriebszustands, in dem das Endgerät (10) von dem Benutzer (U) bedient wird, oder eines Anzeigezustands, in dem ein Bild auf einem Bildschirm des Endgeräts (10) angezeigt wird.

## Revendications

1. Procédé implémenté par ordinateur de commande d'un dispositif terminal (10) qui comprend une unité de commande (11) configurée pour commander les étapes du procédé, un récepteur d'onde sonore (100) configuré pour recevoir une onde sonore, un récepteur d'onde électrique (12) configuré pour recevoir une onde électrique et une unité de communication de réseau (17) configurée pour communiquer avec un serveur de gestion (30) sur un réseau, le procédé comprenant les étapes consistant à :
recevoir (S1) l'onde électrique par le récepteur d'onde électrique (12) ;
le procédé étant **caractérisé par** les étapes consistant à :
notifier (S3) à un utilisateur (U) qu'un code d'identification contenu dans l'onde électrique reçue est détecté (S2) ;
activer (S4) le récepteur d'onde sonore (100) pour recevoir l'onde sonore à condition que le code d'identification soit détecté dans l'onde électrique reçue ; et
déterminer (S5) si le dispositif terminal (10) est ou non dans une zone (TS) dans laquelle l'onde sonore incluant le code d'identification est reçue par le dispositif terminal (10) ; dans lequel
quand il est déterminé que le dispositif terminal (10) est dans ladite zone (TS) dans laquelle l'onde sonore incluant le code d'identification est reçue par le récepteur d'onde sonore (100) du dispositif terminal (10) après la notification à l'utilisateur (U), le serveur de gestion (30) est accessible via l'unité de communication de réseau (17) et des données représentant une visite de l'utilisateur sont transmises au serveur de gestion (30) (S6).

2. Procédé selon la revendication 1, dans lequel
le récepteur d'onde sonore (100) est arrêté sur la base de l'onde électrique reçue après l'activation du récepteur d'onde sonore (100).

3. Procédé selon la revendication 2, dans lequel
le récepteur d'onde sonore (100) est arrêté à condition qu'une distance à partir d'une position d'émission de l'onde électrique soit une valeur prédéterminée ou plus.

4. Procédé selon la revendication 2, dans lequel
le récepteur d'onde sonore (100) est arrêté quand un état dans lequel l'onde électrique n'est pas reçue se poursuit pendant une période de temps définie.

5. Procédé selon la revendication 1, comprenant en outre
la mise en œuvre d'un traitement spécifique basé sur l'onde sonore reçue par le récepteur d'onde sonore dans une zone accessible de l'onde électrique.

6. Procédé selon la revendication 1, dans lequel
il est déterminé si le dispositif terminal (10) est ou non dans l'état de réception d'onde sonore sur la base d'un signal détecté par au moins un capteur (18) parmi un capteur de luminosité, un capteur d'accélération, un capteur d'inclinaison, un capteur de géomagnétisme et un capteur d'attitude.

7. Procédé selon la revendication 1, dans lequel
il est déterminé que le dispositif terminal (10) est dans l'état de réception d'onde sonore dans le cas d'un état de fonctionnement dans lequel le dispositif terminal (10) est utilisé par l'utilisateur (U) ou d'un état d'affichage dans lequel une image est affichée sur un écran de l'appareil terminal (10).

8. Programme de commande d'un ordinateur dans un dispositif terminal (10) qui comprend une unité de commande (11) configurée pour commander les étapes du procédé, un récepteur d'onde sonore (100) configuré pour recevoir une onde sonore, un récepteur d'onde électrique (12) configuré pour recevoir une onde électrique et une unité de communication de réseau (17) configurée pour communiquer avec un serveur de gestion (30) sur un réseau, le programme comprenant :
la réception de l'onde électrique par le récepteur d'onde électrique (12) ;
**caractérisé en ce que** le programme amène l'ordinateur à fonctionner comme :
un dispositif de commande de notification (111), configuré pour notifier à un utilisateur (U) qu'un code d'identification contenu dans l'onde électrique reçue par le récepteur d'onde électrique (12) est détecté ; et
un dispositif de commande d'activation (112), configuré pour activer le récepteur d'onde sonore (100) à condition que le code d'identification soit détecté dans l'onde électrique reçue ;
une unité de détermination (114), configurée pour déterminer si le dispositif terminal (10) est ou non dans une zone (TS) dans laquelle l'onde sonore incluant le code d'identification est reçue par le dispositif terminal (10), dans lequel
quand l'unité de détermination (114) détermine que le dispositif terminal (10) est dans ladite zone dans laquelle l'onde sonore incluant le code d'identification est reçue par le dispositif terminal (10) après la notification effectuée par le dispositif de commande de notification (111), le serveur de gestion (30) est accessible via l'unité de communication de réseau (17) et des données représentant une visite de l'utilisateur sont transmises au serveur de gestion (30).

9. Programme selon la revendication 8, dans lequel
le dispositif de commande d'activation (112) arrête le récepteur d'onde sonore (100) sur la base de l'onde électrique reçue par le récepteur d'onde électrique (12) après l'activation du récepteur d'onde sonore (100).

10. Programme selon la revendication 9, dans lequel
le dispositif de commande d'activation (112) arrête le récepteur d'onde sonore (100) à condition qu'une distance à partir d'une position d'émission de l'onde électrique soit une valeur prédéterminée ou plus.

11. Programme selon la revendication 9, dans lequel
le dispositif de commande d'activation (112) arrête le récepteur d'onde sonore (100) quand un état dans lequel l'onde électrique n'est pas reçue par le récepteur d'onde électrique se poursuit pendant une période de temps définie.

12. Programme selon la revendication 8, dans lequel le programme amène l'ordinateur à fonctionner en outre comme
un processeur, configuré pour effectuer un traitement spécifique basé sur l'onde sonore reçue par le récepteur d'onde sonore (100) dans une zone (TS) accessible de l'onde électrique.

13. Programme selon la revendication 8, dans lequel
l'unité de détermination (114) inclut au moins un capteur (18) parmi un capteur de luminosité, un capteur d'accélération, un capteur d'inclinaison, un capteur de géomagnétisme et un capteur d'attitude, et détermine si le dispositif terminal (10) est ou non dans l'état de réception d'onde sonore sur la base d'un signal détecté par le au moins un capteur.

14. Programme selon la revendication 8, dans lequel
l'unité de détermination (114) détermine que le dispositif terminal (10) est dans l'état de réception d'onde sonore dans le cas d'un état de fonctionnement dans lequel le dispositif terminal (10) est utilisé par l'utilisateur (U) ou d'un état d'affichage dans lequel une image est affichée sur un écran de l'appareil terminal (10).
